# EUROPÄISCHE PATENTANMELDUNG

(11) **EP 1 585 327 A1**
(43) Veröffentlichungstag der Anmeldung: **12.10.2005**
(21) Anmeldenummer: 04023535.0
(22) Anmeldetag: 02.10.2004
(51) Int. Cl.: H04N 7/14

(54) **Verfahren zur Datenreduktion bei Videoübertragung eines Hauptbildes**

(71) Anmelder: Siemens Schweiz AG, 8047 Zürich (CH)
(72) Erfinder: Schenk, Michael, Hettlingen (CH)
(74) Vertreter: Kley, Hansjörg

(57) **Zusammenfassung**

Insbesondere durch die asymmetrischen Zugangstechnologie wirkt sich bei einer Videoübertragung die Beschränkung der Bandbreite negativ aus. In vielen Anwendungen wie z.B. Videotelephonie, wird bei einem Teilnehmer (2) nur ein Teil des übertragenen Hauptbildes (20) auch tatsächlich angezeigt, da ein eigenes Bild (21) oder eine eigene Applikation (21) eingeblendet wird. Es wird daher vorgeschlagen, dass der betreffende Teilnehmer (2) an den anderen Teilnehmer (1) Grösse und Lage eines einzublenden Bildes (21) zurücksignalisiert (Msg21), damit beim betreffenden Teilnehmer (1) dieses Fenster mit einem konstanten Inhalt versehen werden kann und somit bei der Codierung und Übertragung die Datenmenge und Datenrate reduziert wird.

## Beschreibung

Die vorliegende Erfindung betrifft ein Verfahren zur Videoübertragung eines Hauptbildes gemäss dem Oberbegriff des Patentanspruchs 1.

Zur Vermeidung von Unklarheiten und im Sinne einer konzisen Fachsprache wird in dieser Schrift teilweise auf die englischsprachigen Fachbegriffe zurückgegriffen. Zur Erläuterung der verwendeten Begriffe und Akronyme wird auf die am Schluss dieses Dokuments angegebene Liste verwiesen, die einen integrierenden Teil dieses Dokumentes bildet.

Da auch heute mit Breitbandtechnologie und modernen Komprimierungsverfahren für Videosignale die Qualität von Videotelephonie immer noch zu wünschen übrig lässt, muss die vorhandene Bandbreite optimal genutzt werden. Die Codierungs-und Komprimierungsverfahren sind z.B. in H.263 [1] und H.264 [2] festgelegt. Die die Qualität der Videoübertragung beschränkende Bandbreite se ist vielfach durch die heutige, teilweise asymmetrische, xDSL-Zugangstechnologie bedingt. Insbesondere betrifft dies die ADSL-Zugangstechnologie, weil die Upstream-Übertragungsrate deutlich kleiner ist als die Downstream- Übertragungsrate. Bei Videotelephonie verwendet man normalerweise ein sogenanntes Picture-In-Picture - nachfolgend PIP genannt - um das eigene Bild zu sehen. Dieses PIP wird über das dekodierte Videosignal des Partners gelegt. Bedingt durch das PIP sieht man an dieser Stelle den Ausschnitt des Partners nicht. Somit müsste er auch nicht beim Partner komprimiert werden und die Bildqualität würde verbessert. PIP wird stattdessen einfach über das ankommende Signal eingeblendet. Hinzu kommt, dass es aus Benutzersicht sehr wünschenswert ist, die Grösse eines solchen eingeblendeten Bildes selber festlegen zu können. Je nach Anwendung und Implementation eines Videotelefondienstes braucht in diesem eingeblendeten Fenster nicht notwendigerweise das eigene Bild zu stehen, sondern es sollte z.B. ein Nachrichtenticker oder ein bestimmtes Fernsehprogramm im eingeblendeten Fenster dargestellt werden können. Denkbar ist auch, dass mehr als ein Fenster in einem bestimmten Kontext eingeblendet werden soll.

In EP 0 870 401 B1 bzw. DE 696 11 733 T2 [3] (Patentinhaberin: Thomson Consumer Electronics, Inc. Indianapolis US) ist ein Verfahren zur Anzeige eines zusätzlichen Bildes in einem Hauptbild mit folgenden Verfahrensschritten offenbart:
Zuführen eines kombinierten Videosignals, das einem ein zusätzliches Bild enthaltendes Hauptbild entspricht;
wobei im Hauptbild ein Teil gemäss einem Mass enthaltend Lage und Grösse ausgeschnitten wird, ohne dass das Kompressionsverhältnis und das Bildseitenverhältnis des zusätzlichen Bildes geändert wird.

Mit diesem Verfahren kann ein zusätzliches Bild nach Wunsch eines Benutzers in einem Hauptbild platziert werden ohne dass deswegen eine Beeinträchtigung der Bildqualität des zusätzlichen Bildes auftritt.

Bei dem gemäss EP 1 051 039 A2 [4] (Anmelderin: Liberate Techologies LLC San Carlos Califonria US) offenbarten Übertragungsverfahren werden nur jene Teile eines Bildes übertragen, bei denen eine Bildbewegung auftritt.

Der vorliegenden Erfindung liegt nun die Aufgabe zugrunde, ein Verfahren zur Videoübertragung ein ein eingeblendetes Bild enthaltendes Hauptbild anzugeben, bei dem die zu übertragende Datenmenge bzw. Datenrate deutlich reduziert werden kann und bei dem die Grösse und Lage des eingeblendeten Bildes einstellbar ist.

Diese Aufgabe wird erfindungsgemäss durch das im Patentanspruch 1 angegebene Verfahren gelöst.

Gemäss dem erfindungsgemässen Verfahren, wonach
- A: Bei einem Verbindungsaufbau zur Videoübertragung werden Grösse und Lage des zusätzlichen Bildes vom zweiten Gerät an das erste Gerät mit einer Meldung übertragen;
- B: vom ersten Gerät wird vor der Übertragung des im Verfahrensschritt A übermittelten Grösse und Lage des zusätzlichen Bildes der dadurch definierte Teil des Hauptbildes mit einem konstanten Inhalt versehen und dadurch ein zu übertragendes Hauptbild generiert;
- C: das im Verfahrensschritt B generierte Hauptbild wird vom ersten Gerät zum zweiten Gerät übertragen;
ist ein Verfahren geschaffen, bei dem aufgrund des konstanten Inhaltes eines Teils des Hauptbildes die zu übertragende Datenmenge und damit die Datenrate deutlich reduziert werden kann.

Im Sinne dieser Schrift und erfindungsgemässen Lehre sind die verwendeten Begriffe wie folgt zu verstehen und beinhalten nachfolgend beschriebene Ausprägungen:
i) Gerät, Teilnehmer und Subscriber bezeichnen die gleiche Einheit, die Begriffe sind jedoch auf den jeweiligen Kontext abgestimmt.
ii) A-Teilnehmer, B-Teilnehmer im Sinne der Telekommunikationsdienste: rufender Teilnehmer, gerufener Teilnehmer, wobei Teilnehmer im Sinne von i) zu verstehen ist.

Vorteilhafte Ausgestaltungen und Implementationen des erfindungsgemässen Verfahrens sind in weiteren Ansprüchen angegeben.

Ausführungsbeispiele der Erfindung werden nachfolgend anhand der Zeichnung näher erläutert. Dabei zeigt:
- Figur 1: Prinzipelle Darstellung einer Videoübertragung zwischen einem ersten und zweiten Gerät, wobei im übertragenen Hauptbild ein zusätzliches Bild eingeblendet ist;

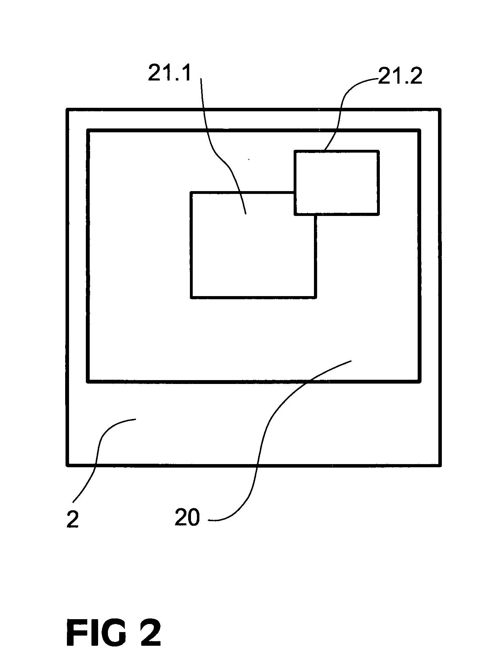

- Figur 2: Darstellung der Ausgabe eines Hauptbildes mit mehr als einem zusätzlichen, eingeblendeten Bild.

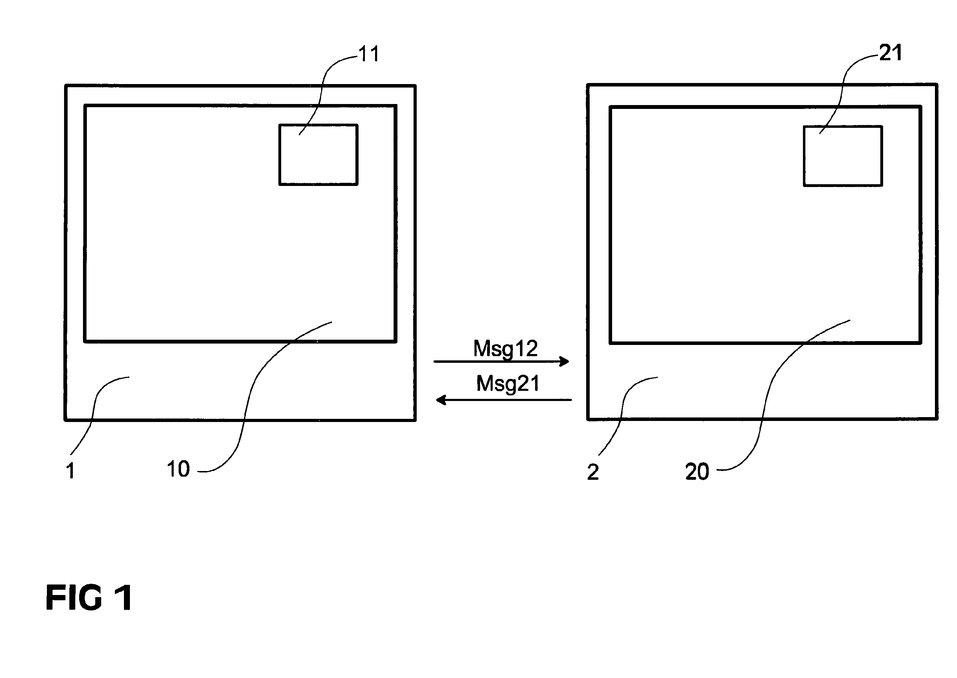

Figur 1 zeigt eine prinzipielle Darstellung einer Videoübertragung zwischen einem ersten Gerät 1 und einem zweiten Gerät 2, in der Figur 1 sind für die Anwendung Videotelephonie folgende Komponenten aufgeführt:
- rufender Teilnehmer 1 bzw. A-Teilnehmer;
- gerufener Teilnehmer 2 bzw. B-Teilnehmer.
Die beiden Teilnehmer, das ist das erste Gerät 1 und das zweite Gerät 2 weisen je eine Bildausgabeeinheit, genannt Monitor, Display, Bildschirm usw. auf, im folgenden kurz «Bildschirm» genannt. Beim jedem Teilnehmer wird auf dem Bildschirm ein vom anderen Teilnehmer übertragenes Hauptbild 10 bzw. 20 ausgegeben. Dieses Hauptbild entspricht z.B. dem Bild einer Person des betreffenden Teilnehmers. Wie eingangs erwähnt, soll bei einer Videotelephonie-Verbindung die betreffende Person von sich auch ein auf dem Hauptbild eingefügte zusätzliches Bild sehen. Dies nicht nur, um ggf. die eigene Mimik zu kontrollieren, sondern sicherzustellen, dass die betreffende Person oder ein zu zeigendes Objekt wie z.B. ein Ausschnitt aus einem Plan auch tatsächlich von der Kamera erfasst wird.

Um die erforderliche Bandbreite zur Übertragung des Videobildes zu reduzieren, wird erfindungsgemäss vorgeschlagen, dass lediglich der noch sichtbare Teil eines Hauptbildes übertragen wird. Wegen der Codierung kann nun nicht einfach an der Lage des zusätzlichen Bildes «nichts» übertragen werden oder dieser Bereich ausgelassen werden. Erfindungsgemäss wird daher dieser Bereich mit einem konstanten Inhalt, der irgend eine Farbe repräsentiert, gefüllt. Dadurch kann bei der Codierung die zu übertragende Datenmenge und damit auch die Datenrate reduziert werden. Lage und Grösse des einzufügenden zusätzlichen Bildes werden daher beim Verbindungsaufbau gegenseitig über je eine Meldung Msg12 und Msg21 übermittelt.

Die Videotelephonie ist keineswegs auf sogenannt «dedicated devices» also auf Geräte für nur den Zweck der Videotelephonie beschränkt. Vielmehr gelangen wegen der flexiblen Handhabung und der leichten Skalierbarkeit Personalcomputer zum Einsatz. In einer Weiterbildung des vorgenannten Verfahrens kann vorgesehen werden, dass die Grösse und Lage des eingefügten zusätzlichen Bildes auch während einer bestehenden Verbindung - auch «session» genannt - zum sendenden Gerät übermittelt wird. Dies ist beispielsweise dann der Fall, wenn eine Person Lage und Grösse des eingefügten Bildes verändern möchte und dies mittels einer Betätigung einer Maus ausführt. Dazu wird die vorerwähnte Meldung Msg21 bzw. Msg12 bedarfsweise während einer bestehenden Videoverbindung übermittelt.

Das erfindungsgemässe Verfahren ist nicht auf eine bestimmte Übertragungstechnologie gebunden. Je nach Implementation kann die Grösse und Lage des eingefügten Bildes enthaltende Meldung wie auch der übrige Meldungsverkehr vom ersten Gerät 1 zum zweiten Gerät mit einer Meldung mit dem Protokoll SIP oder RTP der erfolgen.

Bevorzugt wird in der vorerwähnten Meldung Msg21 bzw. Msg12 auch die Auflösung und ggf. die Codierung übermittelt, damit eine universeller Videotelephoniedienst realisiert werden kann. Dies ist insbesondere dann der Fall, wenn Rechner wie Personalcomputer als Endgeräte benutzt werden.

Das vorgenannte Ausführungsbeispiel bezog sich auf Videotelephonie. Die Erfindung kann aber für eine unidirektionale Übertragung eines Hauptbildes angewendet werden. Dabei ist sowohl eine Punkt-Punkt als auch eine Punkt-Mehrpunkt-Verbindung möglich. Bei einer Punkt-Mehrpunkt-Verbindung kann dabei je eine individuelle Grösse und Lage des mit einem zusätzlichen Bild einzublenden Fenster festgelegt sein.

Die vorgenannten Beispiele bezogen sich auf ein Fenster, das mit dem erfindungsgemässen Verfahren als Konstante übertragen wird. Insbesondere bei Anwendung auf einem Personalcomputer ist es vorteilhaft, wenn der Benutzer mehr als ein Fenster definieren kann, beispielsweise ein Fenster für das eigene Bild bei einer Videoverbindung zu einem anderen Partner (über ein LAN oder eine eingangs erwähnte asymmetrische Zugangstechnologie sei dahingestellt) und ein weiteres Fenster für eine bestimmte Applikation, wie z.B. ein sogenannter News-Ticker oder ein Bild von einer Videokamera, die permanent auf eine zu überwachende Zone gerichtet ist.

Aus der obigen Darstellung zweier nach den verschiedenen Ausgestaltungen des erfindungsgemässen Verfahren betriebenen Teilnehmer 1 und 2 ergeben sich folgende Vorteile gegenüber dem Stand der Technik:
i) Unnötige Bildinhalte eines Hauptbildes werden nicht übertragen;
ii) während einer Verbindung kann das zu übertragende Hauptbild an die Bedürfnisse angepasst werden;
iii) durch die Übermittlung der Auflösung kann ein universeller Videodienst, insbesondere ein universeller Videotelephoniedienst realisiert werden.

### Liste der verwendeten Bezugszeichen

- 1: erstes Gerät, A-Teilnehmer
- 2: zweites Gerät, B-Teilnehmer,
- 3: Netzwerk, IP-Netzwerk
- 10: Hauptbild auf dem ersten Gerät, Hauptbild beim A-Teilnehmer
- 11: Zusätzliches im Hauptbild enthaltenes Bild auf dem ersten Gerät bzw. beim A-Teilnehmer;
- 20: Hauptbild auf dem zweiten Gerät, Hauptbild beim B-Teilnehmer
- 21: Zusätzliches im Hauptbild enthaltenes Bild auf dem zweiten Gerät bzw. beim B-Teilnehmer
- 21.1, 21.2: Zusätzliche im Hauptbild enthaltene Bilder auf dem zweiten Gerät bzw. beim B-Teilnehmer;
zusätzliche Bilder repräsentierend Bild vom B-Teilnehmer oder wenigstens einer Applikation
- Msg12: Meldung vom ersten Gerät zum zweiten Gerät,
Meldung vom A-Teilnehmer zum B-Teilnehmer
- Msg21: Meldung vom zweiten Gerät zum ersten Gerät,
Meldung vom B-Teilnehmer zum A-Teilnehmer

### Liste der verwendeten Abkürzungen

- IP: Internet Protocol
- PIP: Picture in picture
- RTP: Real Time Protocol
- SIP: session initiation protocol
- VoIP: Voice over Internet Protocol

### Liste der zitierten Schriften; Angaben zu Fundstellen

- [1]: ITU-T H.263 (02/98)
Video coding for low bit rate communication
- [2]: ITU-T H.264 (05/2003) (PREPUBLISHED RECOMMENDATION)
Advanced Video coding for generic audiovisual services
- [3]: DE 696 11 733 T2
Fernsehapparat und Verfahren mit Einrichtungen zur Anzeige eines Zusatzbildes variabler Grösser THOMSON CONSUMER ELECTRONICS, INC. 10333 North Meridian Street Indianapolis, IN 46290-1024/US
- [4]: EP 1 051 039 A2
System and methods for preparing multimedia data using digital video data compression
Liberate Technologies LLC, San Carlos, California 94070-6200 (US)

## Patentansprüche

1. Verfahren zur Videoübertragung eines Hauptbildes (20) von einem ersten Gerät (1) zu einem zweiten Gerät (2), wobei bei der Ausgabe des Hauptbildes (20) auf dem zweiten Gerät (2) ein zusätzliches Bild (21) im Hauptbild (20) eingefügt wird, **gekennzeichnet durch** die Verfahrensschritte:
A Bei einem Verbindungsaufbau zur Videoübertragung werden Grösse und Lage des zusätzlichen Bildes (21) vom zweiten Gerät (2) an das erste Gerät (1) mit einer Meldung (Msg21) übertragen;
B vom ersten Gerät (1) wird vor der Übertragung aus der im Verfahrensschritt A übermittelten Grösse und Lage des zusätzlichen Bildes (21) der **dadurch** definierte Teil des Hauptbildes (20) mit einem konstanten Inhalt versehen und **dadurch** ein zu übertragendes Hauptbild (20) generiert;
C das im Verfahrensschritt B generierte Hauptbild (20) wird vom ersten Gerät (1) zum zweiten Gerät (2) übertragen.

2. Verfahren nach Anspruch 1,
**dadurch gekennzeichnet, dass**
die Videoübertragung eines Hauptbildes (10, 20) bidirektional ist.

3. Verfahren nach Anspruch 1 oder 2,
**dadurch gekennzeichnet, dass**
im Verfahrensschritt A in der Meldung (Msg21) zusätzlich die Auflösung des zu übertragenden Hauptbildes (10, 20) übertragen wird.

4. Verfahren nach einem der Ansprüche 1 bis 3,
**dadurch gekennzeichnet, dass**
dass der Verfahrensschritt A nach erfolgtem Verbindungsaufbau mit weiteren Meldungen (Msg21, Msg12) wiederholt wird, um während einer Verbindung Grösse und Lage des zusätzlichen Bildes (11, 21) an eine geänderte Situation anpassen zu können.

5. Verfahren nach einem der Ansprüche 1 bis 4,
**dadurch gekennzeichnet, dass**
im Verfahrensschritt A für mehrere zusätzliche Bilder (21.1, 21.2) Grösse und Lage übertragen wird.

6. Verfahren nach Anspruch 5,
**dadurch gekennzeichnet, dass**
für jedes zusätzliche Bild (21.1, 21.2) eine eigene Meldung (Msg21) vorgesehen ist.

7. Verfahren nach einem der Ansprüche 1 bis 6,
**dadurch gekennzeichnet, dass**
die Meldung (Msg21) im Verfahrensschritt A mit dem Protokoll RTP oder dem Protokoll SIP übertragen wird.
